# EUROPEAN PATENT APPLICATION

(11) **EP 1 158 734 A2**
(43) Date of publication of application: **28.11.2001**
(21) Application number: 01440139.2
(22) Date of filing: 18.05.2001
(51) Int. Cl.: H04L 12/56

(54) **Logical link to physical link allocation method**

(30) Priority: 23.05.2000 US 576625
(71) Applicant: ALCATEL, 75008 Paris (FR)
(72) Inventor: Mayes, Mark, Richardson, Texas 75080 (US); Cantrell, Cyrus, Richardson, Texas 75080 (US)
(74) Representative: Schäfer, Wolfgang

(57) **Abstract**

A method of operating a switching network. The method includes assigning one or more physical links between a first switching node and a plurality of second switching nodes to serve as logical links. The number of physical links assigned to serve as logical links is generally less than the number of physical links connecting the first switching node and the plurality of second switching nodes. The method also includes generating a routing table for routing data received at the first switching node. The routing table is generated using only the physical links assigned to be logical links.

## Description

### BACKGROUND

### 1. Field of the Invention

The invention relates generally to switching networks. In particular, the invention relates to switching networks having multiple routing paths for incoming data.

### 2. Background of the Invention

Switching networks are often used to switch computer or telecommunications packets having protocols such as IP, ATM and X.25. These switching networks typically include a plurality of switching nodes connected to each other. Data received by the switching network is typically routed to its destination by forwarding the data from one switching node to another.

When the data traffic in a typical switching network changes, the routing of data through the switching network must often be changed in order to optimize the flow of data through the switching network. However, these changes often require that the switching network be physically re-wired in order to change the data routing. For instance, the switching network illustrated in U.S. Patent number 5,841,775 must be physically re-wired in order to change the routing of data through the switching network. As a result, there is a need for a switching network which is able to dynamically respond to changing data traffic conditions.

### SUMMARY OF THE INVENTION

The invention relates to a method of operating a switching network. The method includes assigning one or more physical links between a first switching node and a plurality of second switching nodes to serve as logical links. The number of physical links assigned to serve as logical links can be less than the number of switching nodes. The method also includes generating a routing table for routing data received at the first switching node. The routing table is generated using the physical links assigned to be logical links.

Another embodiment of the invention relates to a switching network for routing of data. The switching network includes physical links between a first switching node and a plurality of second switching nodes. The switching network also includes electronics for assigning a portion of the physical links to serve as logical links. The switching network further includes electronics for generating a routing table for routing data received at the first switching node. The routing table is generated using the physical links assigned to be logical links.

In one embodiment of the invention the physical links are assigned to serve as logical links according to a recursive rule. Before the physical link is assigned to serve as a logical link, the recursive rule ensures that a physical link connected to an output port of the first switching node has the capacity to handle data from all the previously assigned logical links which are connected to the input ports of the first switching node. In another embodiment, the recursive rule ensures that a physical link connecting an output port of the first switching node to the input port of a second switching node does not contend with any previously assigned logical links connected to the input ports of the second switching node before the physical link is assigned to serve as a switching node. Contention occurs when different links are carrying data on the same channel.

Another embodiment of the invention includes receiving the routing table at the first switching node and then receiving data having a destination address at the first switching node. The routing table is consulted to determine whether the destination address is present. When the destination address is present in the routing table, the data is routed according to the routing table. When the destination address is not present in the routing table, the data is routed according to a generalized routing rule. In one embodiment the generalized routing rule is a recursive rule.

### BRIEF DESCRIPTION OF THE DRAWINGS

Figure 1 illustrates a switching network including a plurality of switching nodes which are each in communication with a controller. A plurality of physical connections connect the switching nodes to each of the switching nodes in the next row.

Figure 2 illustrates a plurality of physical connections which are assigned to serve as logical connections.

Figure 3 illustrates a method of operating a controller according to the present invention.

Figure 4 illustrate a method of operating a switching node according to the present invention.

Figure 5 illustrates a method for determining whether a physical connection should be assigned to be a logical connection.

### DETAILED DESCRIPTION OF THE PREFERRED EMBODIMENT

The invention relates to operation of a switching network including switching nodes which are physically connected to one another. Each switching node is physically connected to a plurality of other switching nodes. The switching network also includes a controller in communication with each of the switching nodes. The controller assigns a portion of the physical connections to serve as logical connections. These assignments are preferably made using a recursive rule. The logical connections are used to develop routing tables for each switching node. The controller can forward these routing tables to the switching nodes for use in forwarding data through the switching network. Since only a portion of the physical connections are assigned to serve as logical connections, the controller can easily reconfigure the network by changing the selection of physical connections assigned to serve as logical connections. This re-configuration can be performed in response to changes in the data traffic such as switching nodes being removed from and added to the switching network.

During operation of the switching network, the switching nodes receive data having a destination address. When the destination address is included in a switching node's routing table, the switching node routes the data according to the routing table. When the destination address is not present in the routing table, the data is routed according to the general routing rule. In one embodiment of the invention the general routing rule is a recursive rule which fans the data out across the switching network in order to make full use of the resources in the switching network.

The methods of the present invention can result in a plurality of logical connections being connected to each switching node. Accordingly, more than one path is available to route data through the switching network. The availability of multiple paths through the switching network can provide increased load balancing, jitter reduction and fault tolerance.

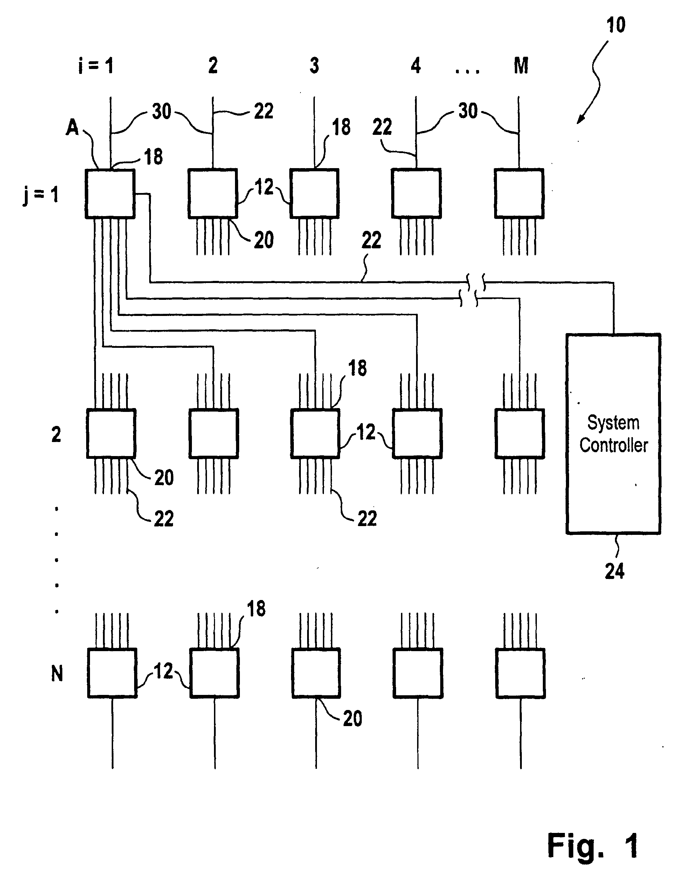

Figure 1 illustrates a switching network 10 according to the present invention. The switching network 10 includes as a plurality of switching nodes 12 arranged in M columns and N rows. As a result, each switching node 12 has an address Sᵢⱼ where it is the column index and j is the row index. The switching network 10 is illustrated as an array solely for the purposes of simplifying the following discussion of the invention. Specifically, the array only illustrates one technique for interconnecting switching nodes 12. Hence, a switching network 10 according to the present invention can have switching nodes 12 arranged in a variety of different configurations. For instance, the switching nodes 12 need not be geographically arranged in rows and columns. Further, one row can have more switching nodes 12 than another row and one column can have more switching nodes 12 than another column depending on the physical interconnectivity of the switching network 10. Additionally, the switching node configuration can be disrupted by the addition and subtraction of switching nodes 12 from the switching network 10 over time.

The switching network 10 includes a plurality of network inputs 14 and a plurality of network outputs 16. The switching network 10 routes data on one of the network inputs 14 to one of the network outputs 16. Each switching node 12 includes one or more input ports 18 and one or more output ports 20. Each switching node 12 includes electronics for directing data from any of the switching node's input ports 18 to any of the switching node's output ports 20. Suitable switching nodes 12 for use with the switching network 10 include, but are not limited to, switches, gates and routers such as TCP/IP routers.

Each of the switching nodes in rows j = 1 to j = N-1 are physically connected to an input port 18 on a plurality of the switching nodes 12 in the row j + 1 and preferably to all of the switching nodes 12 in the row j + 1. These connections are illustrated by each of the physical links 22 from the switching node 12 labeled A in row j = 1 to an input port of each switching node 12 in the row j = 2. Although not illustrated, the remaining switching nodes 12 in rows j = 1 to j = N-1 are similarly connected. Each switching node 12 in row j need not be physically connected to the same number of input ports 18 in row j + 1.

The switching network 10 also includes a controller 24 having electronics providing the functionality of the controller 24. Suitable electronics for including in the controller 24 or the switching nodes 12 can include one or more processors. Suitable processors include, but are not limited to, microprocessors, a digital signal processors (DSP), integrated circuits, application specific integrated circuits (ASICs), logic gate arrays and switching arrays. The controller 24 can also include one or more memories for storing instructions to be carried out by the one or more processors and/or for storing data developed during operation of the switching network 10. Suitable memories include, but are not limited to, RAM and electronic read-only memories (e.g., ROM, EPROM, or EEPROM).

As described above, physical links 22 preferably connect each of the switching nodes 12 in rows j = 1 to j = N-1 to an input port 18 on each of the switching nodes 12 in the row j = j + 1. However, each of these physical links 22 is not used during operation of the switching network 10. The controller 24 identifies a collection of the physical links 22 which are used during the operation of the switching network 10. The identified physical links 22 are logical links 30.

The controller 24 preferably employs a recursive rule to select the logical links 30 from among the physical links 22. A recursive rule is a rule which builds upon itself. An example of a recursive relationship is j' = j + 1, where j' is a new value for the variable j. In one embodiment of the invention, both the capacity of a link and the contention of the link with existing logical links 30 are considered before a physical link 22 becomes a logical link 30. For instance, a physical link 22 from an output port 20 of a first switching node 12 to an input port 18 of a second switching node 12 can not become a logical link 30 unless the capacity of the physical link 22 exceeds the total capacity of the logical links 30 connected to the input ports 18 of first the switching node 12. Because the decision of whether a physical link 22 is to be assigned as a logical link 30 is a function of the previous link assignments, this is a recursive test.

Additionally, a physical link 22 is unable to become a logical link 30 if it contends with other logical links 30 to the second switching node 12. The physical link 22 is determined to contend with a previously identified logical link 30 when the physical link 22 and the logical link 30 are each carrying data on the same channel such as the channels employed in time domain multiplexing and wavelength division multiplexing. When the two links are carrying data on the same channel there is an opportunity for collision at the switching node 12. To avoid these collisions, the physical links 22 having this collision potential are not assigned to logical links 30. Again, this is a recursive test because the decision of whether a physical link 22 is to be assigned as a logical link 30 is a function of the previous link assignments.

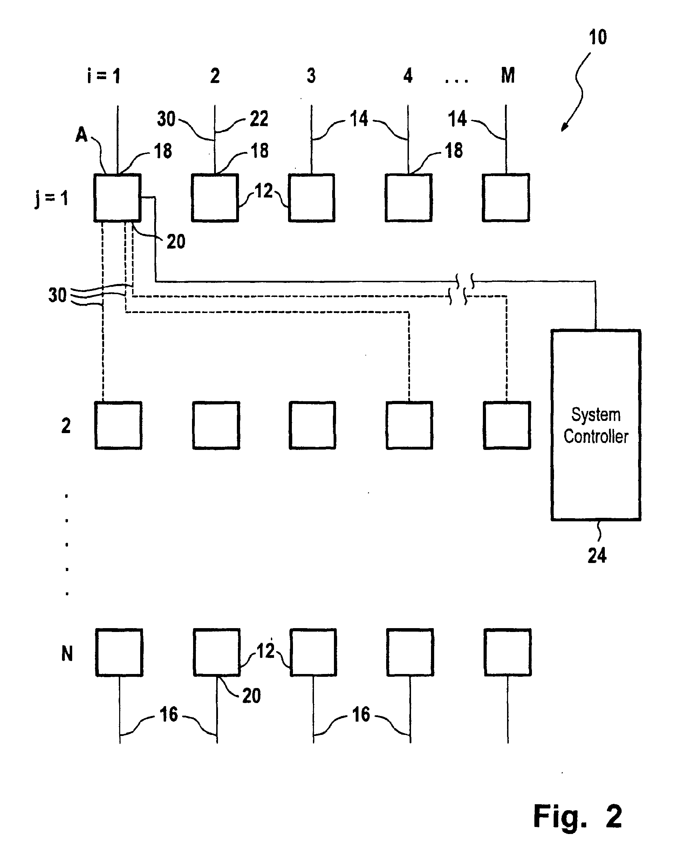

Figure 2 illustrates the switching system of Figure 1 after the methods of the present invention have been employed to assign the physical links 22 connected to the switching node 12 labeled A to serve as logical links 30. All of the physical links 22 are not assigned to serve as logical links 30. However, more than one physical link 22 connected to a switching node 12 is assigned to serve as a logical link 30. Accordingly multiple paths are available for data to be routed through the switching network 10. As described above, the existence of multiple paths allows for increased load balancing, fault tolerance and reduction in jitter.

The controller 24 employs the identified logical links 30 to build routing tables for each of the switching nodes 12. The messages typically include a header indicating the destination address of the message. The routing tables indicate how a message with a particular destination address in row i' should be routed through the switching network 10. The routing tables developed by the controller 24 can be specific to each routing module. Hence, the controller 24 forwards the routing table to its associated routing module.

Each switching node 12 uses the routing table received from the controller 24 to route data received at the switching node 12. When a destination is not listed in the routing table, the routing module routes the incoming messages according to a general routing rule. The general routing rule is preferably a recursive rule. For instance, when data is received at a switching node having address Sij, the general routing rule can be i' = i + 1 and j' = j + k - M floor [( j + k)/M], where i' is the row to which the data is to be forwarded, and j' is the switching node 12 in row i' to which the data is to be forwarded. Floor is a function which truncates the value of ( j + k)/ M to an integer. For instance, floor (.4) returns 0 while floor (1.8) returns 1. Accordingly, this function applies periodic boundary conditions to the switching network 10. k is an administratively selected constant which causes the data traffic to be fanned across the switching network 10 in order to maximize the resources of the switching network 10. Although M is described above as the total number of columns in the switching network 10, the number of switching nodes 12 in a row can be different from row to row as described above. Accordingly, M can be the number of switching nodes 12 to which the output ports 20 of switching node Sᵢⱼ are physically connected. The value of k can be varied in response to the characteristics of the incoming data in order to partition the data flow within the switching network 10. For instance, the value of k can be two for incoming data from one city and four for incoming data from another system. This rule is recursive because j' is a function of the previous j and i' is a function of the previous i. Although this rule includes two recursive relationships, i.e. i' and j', a recursive rule according to the present invention can include a single recursive relationship.

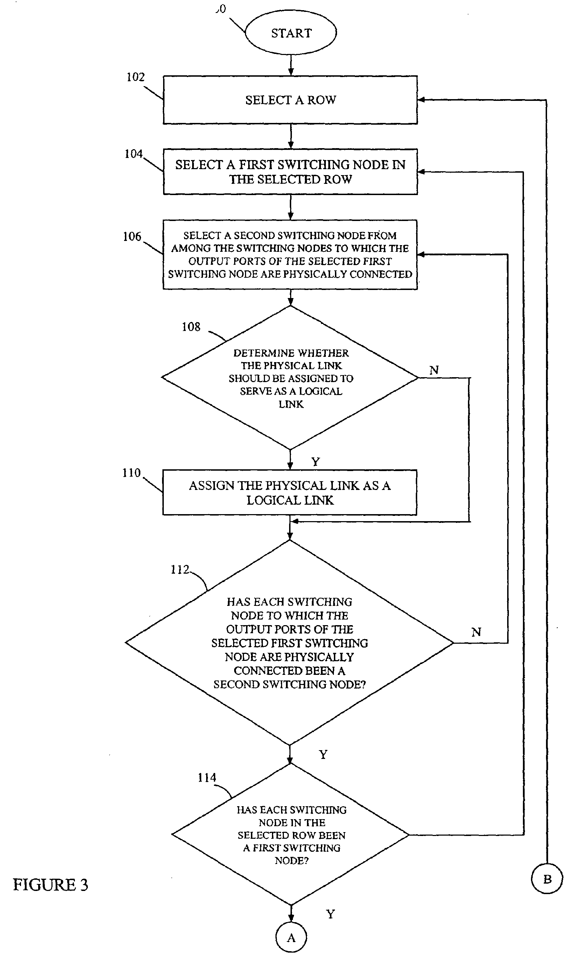

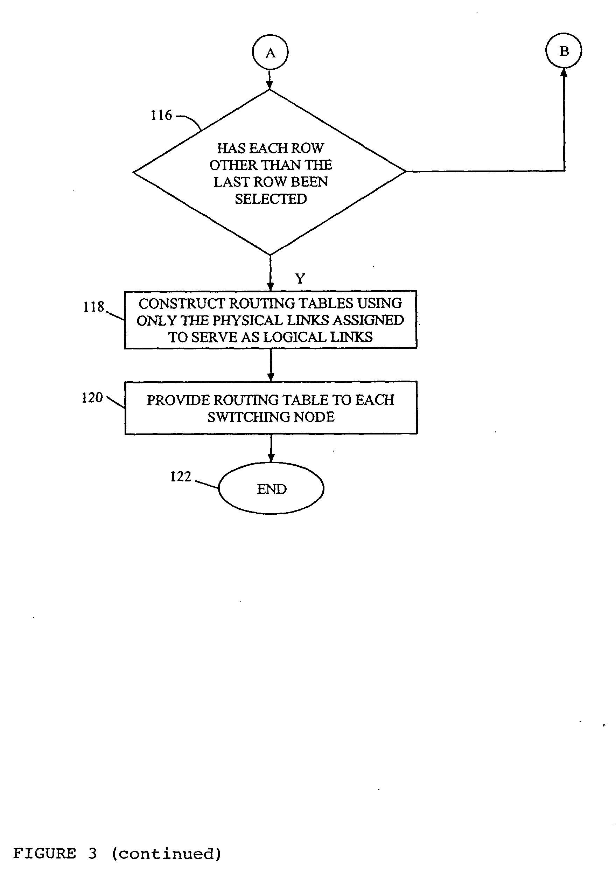

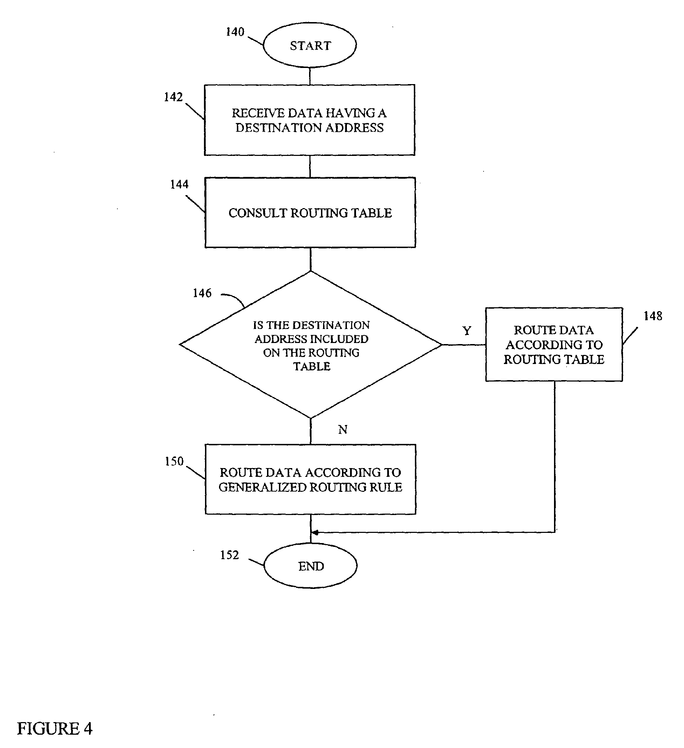

Figure 3 illustrates a method of operating the controller 24 of a switching network 10 according to the present invention. The method begins at start block 100. At process block 102, a row is selected. At process block 104 a first switching node 12 is selected from among the switching nodes 12 in the selected two. At process block 106 a second switching node 12 is selected from among the switching nodes 12 to which the output ports 20 of the first selected node is connected. At decision block 108 a determination is made whether the physical link 22 between the first switching node 12 and the second switching node 12 should be a logical link 30. This determination is preferably made by applying a recursive rule. Figure 4 illustrates a method for determining whether a physical link 22 should be a logical link 30. When the determination at decision block 108 is positive, the physical link 22 is assigned to be a logical link 30 at process block 110.

When the determination at decision block 108 is negative, decision block 112 is accessed. Similarly, decision block 112 is accessed after the physical link 22 is assigned to be a logical link 30 at process block 110. At decision block 112, a determination is made whether each of the switching nodes 12 to which an output port 20 of the first switching node 12 is physically linked has been selected as the second switching node 12. When the determination is negative, the method returns to process block 106. When the determination is positive, a determination is made whether each switching node 12 in the selected row has been a first switching node 12 at decision block 114. When the determination is negative the method returns to process block 104. When the determination is positive, a determination is made whether each row other than the last row has been the selected row at decision block 116. When the determination is negative, the method returns to process block 102.

When the determination at decision block 116 is positive, a routing table is generated for one or more of the switching nodes 12 at process block 118. The routing table is generated using only the logical links 30. Hence, the physical links 22 which are not assigned to be logical links 30 are not used in the routing table. Each routing table can be generated for a specific switching node 12. Hence, the controller 24 can generate a routing table which is unique to each switching node 12. At process block 120, the controller 24 forwards each routing table to the associated switching node 12. The method terminates at end block 122.

Figure 4 illustrates a method of operating a switching node 12 to route messages according to the present invention. The method starts at start block 140 after the switching node 12 has received a routing table from the controller 24. At process block 142, the switching node 12 receives data having a header with a destination address. At process block 144 the routing table is consulted. At determination block 146, a determination is made whether the destination address included in the received data is included in the routing table. When the determination is positive, the data is routed according the routing table at process block 148. The method then returns to process block 142.

When the determination at decision block 146 is negative, process block 150 is accessed. At process block 150 the data is routed according to a generalized routing rule. The generalized routing rule is preferably a recursive rule. As described above, a suitable recursive generalized routing rule is i' = i +1 and j' = j + k - M floor [( j + k)/ M]. After the data is routed at process block 148 and 150, the message terminates at end block 152.

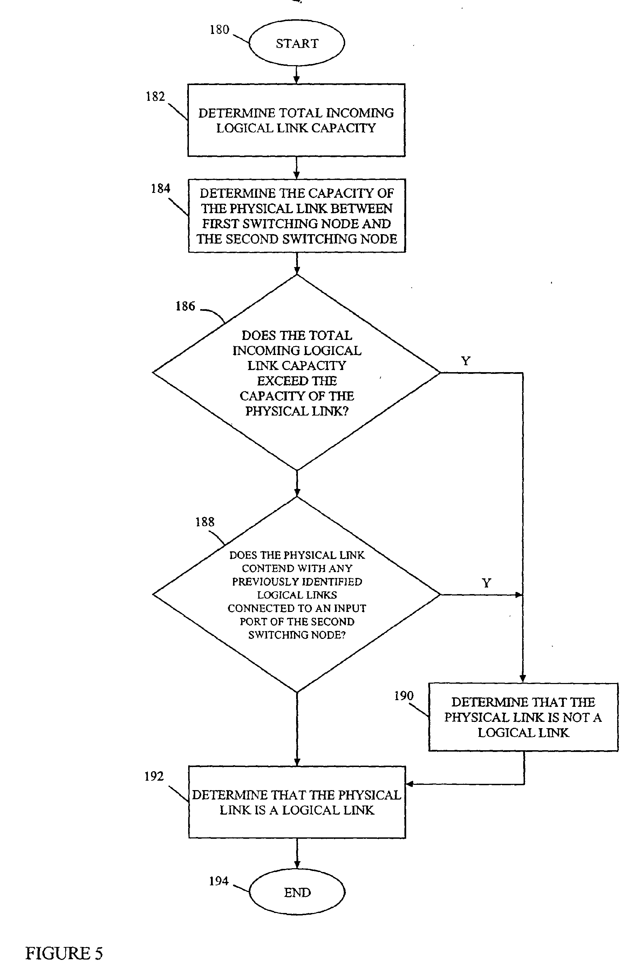

Figure 5 illustrates a method of determining whether a physical link 22 should be assigned to be a logical link 30. The illustrated method is a recursive method. The method starts at start block 180 where the first switching node 12 and the second switching node 12 are identified. The first switching node 12 and the second switching node 12 can be identified by a process block employing the method such as the determination block 108 illustrated in Figure 4.

At process block 182 the total incoming logical link 30 capacity is determined. The total incoming logical link 30 capacity is the sum of the capacities for each previously identified logical link 30 which is connected to an input port 18 of the first switching node 12. Any links which carry input to the switching node 12 are defaulted to logical links 30. For instance, the switching network 10 inputs are logical links 30 since they carry input to the associated switching nodes 12.

At process block 184 the capacity of the physical link 22 between the first switching node 12 and the second switching node 12 is determined. At determination block 186 a determination is made whether the total incoming logical link 30 capacity exceeds the capacity of the physical link 22 at issue. When the determination at process block 186 is negative, determination block 188 is access. At determination block 188, a determination is made whether the physical link 22 contends with any previously identified logical link 30 which is connected to an input port 18 of the second switching node 12. The physical link 22 is determined to contend with a previously identified logical link 30 when the physical link 22 and the logical link 30 are each carrying data on the same channel such as the channels employed in time domain multiplexing and wavelength division multiplexing.

When the determination at decision block 186 and 188 is positive, the physical link 22 is determined not to be a logical link 30 at process block 190. However, when the determination at process block 192 is negative, the physical link 22 is determined to be a logical link 30 at process block 192. The method terminates at end block 200.

Other embodiments, combinations and modifications of this invention will occur readily to those of ordinary skill in the art in view of these teachings. Therefore, this invention is to be limited only by the following claims, which include all such embodiments and modifications when viewed in conjunction with the above specification and accompanying drawings.

## Claims

1. A method of operating a switching network, comprising:
assigning one or more physical links between a first switching node and a plurality of second switching nodes to serve as logical links, the number of physical links assigned to be logical links being less than the number of physical links connecting the first switching node the plurality of second switching nodes; and
generating a routing table for routing data received at the first switching node, the routing table generated using the physical links assigned to be logical links.

2. The method of claim 1, wherein assigning one or more physical links includes applying a recursive rule to the physical links to determine whether a physical link should be assigned to serve as a logical link.

3. The method of claim 2, wherein applying a recursive rule includes selecting a test switching node from among the second switching nodes and determining whether logical connections which provide input to the first switching node have a capacity which exceeds a capacity of the physical link connecting the first switching node and the test switching node.

4. The method of claim 3, wherein applying a recursive rule includes not assigning the physical link connecting the first switching node and the test switching node to serve as a logical link when the logical connections which provide input to the first switching node have a capacity which exceeds the capacity of one of the test physical link.

5. The method of claim 2, wherein applying a recursive rule includes selecting a test switching node from among the second switching nodes and determining whether the physical link connecting the first switching node and the test switching node contends with physical links which are connected to the test switching node and which are previously assigned to serve as logical links.

6. The method of claim 3, wherein applying a recursive rule includes not assigning the physical link connecting the first switching node and the test switching node to serve as a logical link when the physical link connecting the first switching node and the test switching node contends with physical links which are connected to the test switching node and which are previously assigned to serve as logical links.

7. The method of claim 1, wherein the switching node is a IP router.

8. The method of claim 1, further comprising:
receiving the routing table at the first switching node.

9. The method of claim 1, further comprising:
receiving the routing table at the first switching node;
receiving data having a destination address at the first switching node;
routing the data according to the routing table in response to finding the destination address in the routing table.

10. The method of claim 1, further comprising:
receiving the routing table at the first switching node;
receiving data having a destination address at the first switching node; and
routing the data according to a general routing rule in response to not finding the destination address in the routing table.

11. The method of claim 10, wherein the routing rule is a recursive rule.

12. A switching network for routing of data, comprising:
physical links between a first switching node and a plurality of second switching nodes;
electronics for assigning one or more of the physical links to serve as logical links, the number of physical links assigned to be logical links being less than the number of physical links connecting the first switching node the plurality of second switching nodes; and
electronics for generating a routing table for routing data received at the first switching node, the routing table generated using only the physical links assigned to be logical links.

13. The system of claim 12, wherein assigning one or more physical links includes applying a recursive rule to the physical links to determine whether a physical link should be assigned to serve as a logical link.

14. The system of claim 13, wherein applying a recursive rule includes selecting a test switching node from among the second switching nodes and determining whether logical connections which provide input to the first switching node have a capacity which exceeds a capacity of the physical link connecting the first switching node and the test switching node.

15. The system of claim 14, wherein applying a recursive rule includes not assigning the physical link connecting the first switching node and the test switching node to serve as a logical link when the logical connections which provide input to the first switching node have a capacity which exceeds the capacity of one of the test physical link.

16. The system of claim 13, wherein applying a recursive rule includes selecting a test switching node from among the second switching nodes and determining whether the physical link connecting the first switching node and the test switching node contends with physical links which are connected to the test switching node and which are previously assigned to serve as logical links.

17. The system of claim 14, wherein applying a recursive rule includes not assigning the physical link connecting the first switching node and the test switching node to serve as a logical link when the physical link connecting the first switching node and the test switching node contends with physical links which are connected to the test switching node and which are previously assigned to serve as logical links.

18. The system of claim 12, wherein the switching node is a TCP/IP router.

19. The system of claim 12, further comprising:
electronics for receiving the routing table at the first switching node.

20. The system of claim 12, further comprising:
electronics for receiving the routing table at the first switching node;
electronics for receiving data having a destination address at the first switching node; and
electronics for routing the data according to the routing table in response to finding the destination address in the routing table.

21. The system of claim 12, further comprising:
electronics for receiving the routing table at the first switching node;
electronics for receiving data having a destination address at the first switching node; and
electronics for routing the data according to a general routing rule in response to not finding the destination address in the routing table.

22. The system of claim 21, wherein the routing rule is a recursive rule.
